# EUROPÄISCHE PATENTANMELDUNG

(11) **EP 1 588 871 A1**
(43) Veröffentlichungstag der Anmeldung: **26.10.2005**
(21) Anmeldenummer: 05006174.6
(22) Anmeldetag: 22.03.2005
(51) Int. Cl.: B60G 9/00

(54) **Hinterachse**

(30) Priorität: 23.04.2004 DE 102004020050
(71) Anmelder: DaimlerChrysler AG, 70567 Stuttgart (DE)
(72) Erfinder: Schreiber, Thomas, 71384 Weinstadt (DE)

(57) **Zusammenfassung**

Die Erfindung geht aus von einer Hinterachse mit einem Achskörper (10), einer Seitenkraftlagereinheit (11), insbesondere einer Querlenkereinheit, zur Abstützung von Seitenkräften und einer Längskraftlagereinheit (12), insbesondere einer Längslenkereinheit, zur Abstützung von Längskräften.

Es wird vorgeschlagen, dass wenigstens ein Mittel (27a, 27b) der Längskraftlagereinheit (12) zur Erzielung eines Seitenkraftlenkens bei auftretenden Seitenkräften (Fₛₐ, Fₛᵢ) während des Betriebs in Längsrichtung (13, 14) beweglich ausgeführt ist.

## Beschreibung

Die Erfindung betrifft eine Hinterachse nach dem Oberbegriff des Anspruchs 1.

Aus der US 3,931,863 ist eine gattungsbildende Hinterachse mit einem starren Achskörper, einer von einem Querlenker gebildeten Seitenkraftlagereinheit zur Abstützung von Seitenkräften und einer von vier Längslenkern gebildeten Längskraftlagereinheit zur Abstützung von Längskräften bekannt.

Zur Geräuschreduzierung ist im Bereich einer Lagerstelle des Querlenkers am starren Achskörper ein zusätzliches Gewicht vorgesehen, um ohne Dämpfung vorliegende Schwingungseigenschaften vorteilhaft anzupassen.

Der Erfindung liegt insbesondere die Aufgabe zugrunde, eine gattungsgemäße Hinterachse mit verbesserten fahrdynamischen Eigenschaften und verbesserten Komforteigenschaften bereitzustellen. Sie wird gemäß der Erfindung durch die Merkmale des Anspruchs 1 gelöst. Weitere Ausgestaltungen ergeben sich aus den Unteransprüchen.

Die Erfindung geht aus von einer Hinterachse mit einem Achskörper, einer Seitenkraftlagereinheit, insbesondere einer Querlenkereinheit, zur Abstützung von Seitenkräften und einer Längskraftlagereinheit, insbesondere einer Längslenkereinheit, zur Abstützung von Längskräften.

Es wird vorgeschlagen, dass wenigstens ein Mittel der Längskraftlagereinheit zur Erzielung eines definierten Seitenkraftlenkens bei auftretenden Seitenkräften während des Betriebs in Längsrichtung beweglich ausgeführt ist. Es kann vorteilhaft ein Seitenkraftlenkanteil erhöht und ein Wanklenkanteil reduziert werden, wodurch eine verbesserte Fahrdynamik erzielt werden kann. Ferner kann durch die bewegliche Ausführung des Mittels der Längskraftlagereinheit eine Schwingungsübertragung der Hinterachse auf einen Aufbau eines Kraftfahrzeugs und dadurch bedingte Geräusche reduziert und der Fahrkomfort erhöht werden.

Unter Wanklenken soll in diesem Zusammenhang eine Änderung eines Spurwinkels der Hinterachse durch Neigung eines die Hinterachse umfassenden Kraftfahrzeugs verstanden werden. Der Achskörper ist vorteilhaft als starrer Körper ausgebildet, wodurch eine kostengünstige und besonders flachbauende Hinterachse erreicht werden kann, die besonders vorteilhaft für den Einsatz bei Transportern geeignet ist. Möglich ist jedoch auch, dass der Achskörper in verschiedene, dem Fachmann als sinnvoll erscheinende Richtungen beweglich, insbesondere elastisch verformbar, ausgeführt ist, beispielsweise torsionselastisch usw. Die Seitenkraftlagereinheit und die Längskraftlagereinheit können neben in der Regel von einfachen Stangenkonstruktionen gebildeten Querlenkereinheiten bzw. Längslenkereinheiten auch durch verschiedene, dem Fachmann als sinnvoll erscheinende Bauteile und Baugruppen gebildet sein, beispielsweise kann die Seitenkraftlagereinheit von einem so genannten Wattgestänge gebildet sein usw.

Die bewegliche Ausführung des Mittels der Längskraftlagereinheit kann durch verschiedene, dem Fachmann als sinnvoll erscheinende Maßnahmen erreicht werden. Beispielsweise können ein in zwei Teile geteilter Längslenker, dessen Teile in Längsrichtung zueinander verschiebbar ausgeführt sind oder ein in Längsrichtung elastisch verformbarer Längslenker etc vorgesehen sein. Umfasst jedoch die Längskraftlagereinheit wenigstens eine Federeinheit zur bewegbaren Lagerung des Mittel der Längskraftlagereinheit in Längsrichtung, können besonders konstruktiv einfach eine kontrollierte Bewegung und vorteilhafte Steifigkeit erreicht werden.

In einer weiteren Ausgestaltung der Erfindung wird vorgeschlagen, dass die Federeinheit in Längsrichtung wenigstens einen Impedanzsprung aufweist, wodurch in Extrembedingungen, wie beispielsweise bei Vollbremsungen usw., besonders hohe Steifigkeiten erreicht werden können.

Ist der Impedanzsprung durch wenigstens einen Anschlag realisiert, kann dieser besonders konstruktiv einfach und kostengünstig erreicht werden, wobei dieser jedoch auch durch andere dem Fachmann als sinnvoll erscheinende konstruktive Lösungen, wie beispielsweise spezielle Federelemente, realisiert sein kann.

Ferner wird vorgeschlagen, dass der Anschlag durch ein Federelement gebildet ist, wodurch ein gedämpftes Anschlagen und eine hohe Lebensdauer der Federeinheit erreicht werden können.

In einer weiteren Ausgestaltung wird vorgeschlagen, dass die Federeinheit in Längsrichtung eine Federkonstante zwischen 750 N/mm und 1050 N/mm aufweist, wodurch insbesondere bei Transportern von 2 Tonnen bis 5 Tonnen bei Erreichen eines Seitenkraftlenkens in gewünschter Höhe eine vorteilhafte Steifigkeit, insbesondere Quersteifigkeit, erzielt werden kann.

Das Mittel der Längskraftlagereinheit ist vorteilhaft über eine Wegstrecke in Längsrichtung von mindestens 1 mm und besonders vorteilhaft, ausgehendend von einer Gleichgewichtslage, über eine Wegstrecke von mindestens +/- 2 mm oder +/- 3 mm bewegbar ausgeführt, wodurch konstruktiv einfach ein Seitenkraftlenkanteil in gewünschter Höhe erzielt und damit der Wanklenkanteil in gewünschter Weise reduziert werden kann. Vorteilhaft ist der Wanklenkanteil kleiner als 0,3 Grad Spurwinkel im Betrag und besonders vorteilhaft zumindest im Wesentlichen gleich Null.

Umfasst die Seitenkraftlagereinheit eine Einheit zur Abstützung in Querrichtung, die zumindest in Querrichtung eine größere Federkonstante aufweist als die Federeinheit der Längskraftlagereinheit in Längsrichtung, kann eine hohe Quersteifigkeit bei einer dennoch vorteilhaften Schwingungsabkopplung erzielt werden. Die Federsteifigkeit der Einheit der Seitenkraftlagereinheit ist dabei in Querrichtung vorteilhaft mindestens doppelt so hoch wie die Federsteifigkeit der Federeinheit der Längskraftlagereinheit in Längsrichtung.

Ferner wird vorgeschlagen, dass die Hinterachse eine Federeinheit mit einer progressiven Federkennlinie zur Abstützung des Achskörpers in Einbaulage in vertikaler Richtung aufweist, wodurch ein Angleich von Höhenniveaus bei beladenem und bei unbeladenem Kraftfahrzeug erzielt und damit eine Abhängigkeit des Lenkverhaltens der Hinterachse vom Beladezustand reduziert werden kann.

Weist die Hinterachse eine Luftfedereinheit zur Abstützung des Achskörpers in Einbaulage in vertikaler Richtung auf, können eine besonders vorteilhafte Schwingungsabkopplung und ein damit verbundener hoher Komfort erzielt werden. Ferner kann eine Luftfedereinheit konstruktiv einfach einstellbar ausgeführt und ein Höhenniveau kann vorteilhaft unabhängig vom Beladezustand konstant gehalten werden. Neben einer einstellbaren Luftfedereinheit sind jedoch auch andere, dem Fachmann als sinnvoll erscheinende einstellbare Federeinheiten denkbar.

Ist die Luftfedereinheit in Einbaulage, bei horizontaler, ebener Fahrbahn, zu einer durch eine Gewichtskraft hervorgerufenen, resultierenden vertikalen Abstützkraftkomponente des Achskörpers in Längsrichtung und/oder in Querrichtung zumindest im Wesentlichen symmetrisch angeordnet, kann eine besonders vorteilhafte Schwingungsabkopplung der Hinterachse von einem Aufbau eines Kraftfahrzeugs erzielt werden, und zwar indem durch unsymmetrische Anordnung hervorgerufene Momente und Kräfte in Lagerstellen der Längskraftlagereinheit und dadurch bedingte Schwingungen und Geräusche zumindest weitgehend vermieden werden können.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine perspektivische Ansicht einer erfindungsgemäßen Hinterachse,
- Fig. 2: eine schematisierte Draufsicht der Hinterachse bei einer Geradeausfahrt,
- Fig. 3: eine schematisierte Draufsicht der Hinterachse bei Kurvenfahrt,
- Fig. 4: eine Lagereinheit eines Längslenkers der Hinterachse mit einer Federeinheit,
- Fig. 5: einen Schnitt entlang der Linie V - V in Fig. 4 und
- Fig. 6: eine Seitenansicht der Hinterachse im montierten Zustand an einem Aufbau eines Kraftfahrzeugs.

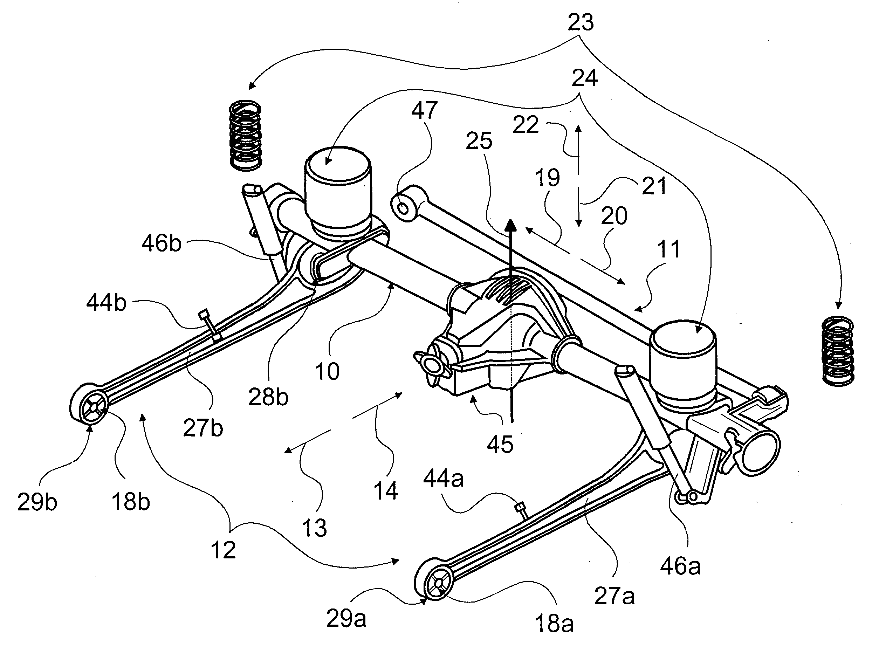

Fig. 1 zeigt eine perspektivische Ansicht einer erfindungsgemäßen, angetriebenen Hinterachse mit einem starren Achskörper 10, in dessen mittleren Bereich ein Differentialgetriebe 45 angeordnet ist. Die Hinterachse umfasst eine von einer Querlenkereinheit gebildete Seitenkraftlagereinheit 11 zur Abstützung von Seitenkräften Fₛₐ, Fₛᵢ, die in mit einer Vorwärtsfahrtrichtung übereinstimmenden Längsrichtung 13 mit einem Abstand 26 vor dem Achskörper 10 angeordnet ist (Fig. 1, 2 und 3). Die Seitenkraftlagereinheit 11 weist eine quer zur Längsrichtung 13 ausgerichtete Stange auf, die mit einem ersten Ende im Bereich eines Endes des Achskörpers 10 um eine in Längsrichtung 13 verlaufende Achse schwenkbar gelagert ist und an einem zweiten Ende eine angeformte Lagerbuchse zur Aufnahme einer Lagereinheit 47 aufweist, über welche die Stange an einem Aufbau 43 eines für eine entsprechende Hinterachse ausgelegten Kleintransporters angekoppelt werden kann.

Ferner weist die Hinterachse eine von einer Längslenkereinheit gebildete Längskraftlagereinheit 12 zur Abstützung von Längskräften auf. Die Längskraftlagereinheit 12 umfasst zwei in Längsrichtung 13 ausgerichtete Längslenker 27a, 27b, die jeweils an einem ersten Ende über vier Gummilager 28a, 28b an den Achskörper 10 gekoppelt sind. Die Gummilager 28a, 28b dienen zur Reduzierung eines durch die Längslenker 27a, 27b bedingtes Torsionsmoments des Achskörpers 10 und weisen in Längsrichtung 13, 14 eine Federkonstante von 3000 N/mm auf, wobei diese grundsätzlich eine Federkonstante zwischen 3000 N/mm und 9000 N/mm aufweisen könnten. An einem zweiten Ende weisen die Längslenker 27a, 27b jeweils eine angeformte Lagerbuchse zur Aufnahme einer Lagereinheit 29a, 29b zur Ankopplung an den Aufbau 43 des Kleintransporters auf.

Die Längslenker 27a, 27b der Längskraftlagereinheit 12 sind zur Erzielung eines Seitenkraftlenkens bei auftretenden Seitenkräften Fₛₐ, Fₛᵢ während des Betriebs in Längsrichtung 13, 14 beweglich ausgeführt, und zwar weisen die Lagereinheiten 29a, 29b der Längskraftlagereinheit 12 Federeinheiten 18a, 18b zur bewegbaren Lagerung der Längslenker 27a, 27b in Längsrichtung 13, 14 auf.

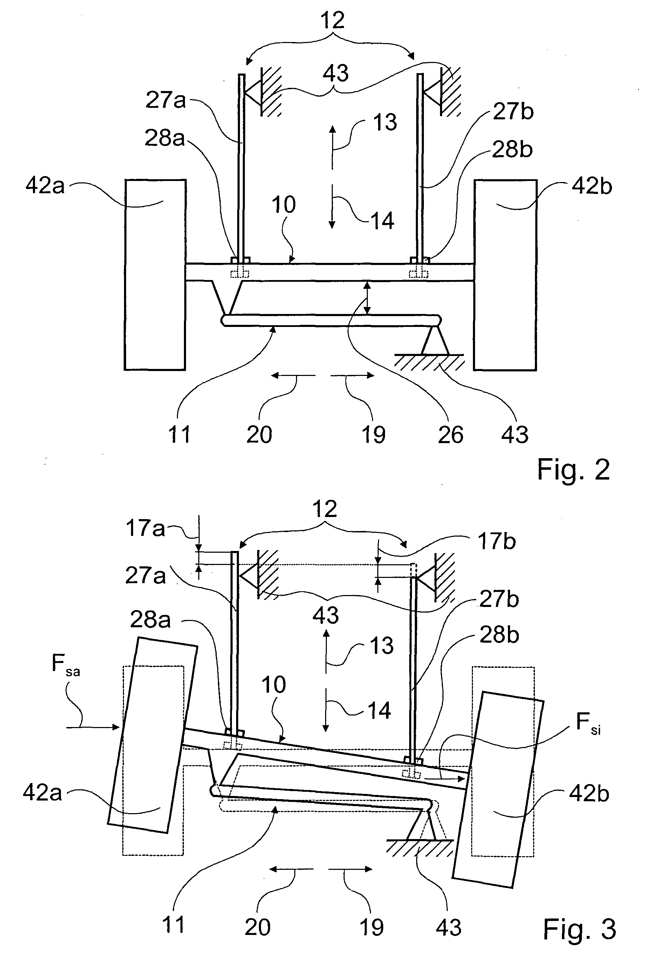

Die Längslenker 27a, 27b der Längskraftlagereinheit 12 sind in Längsrichtung 13, 14 jeweils über die Federeinheiten 18a, 18b der Lagereinheiten 29a, 29b am Aufbau 43 des Transporters abgestützt und sind dabei in Längsrichtung 13, 14 ausgehend von einer Gleichgewichtslage über eine Wegstrecke 17a, 17b von +/- 3 mm bewegbar (Fig. 2 bis 5).

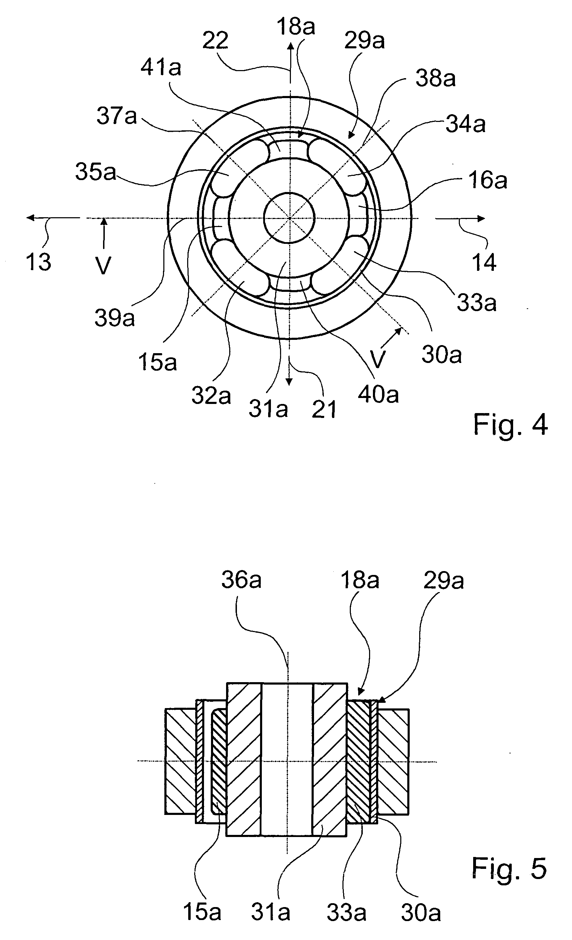

Nachfolgend ist die Lagereinheit 29a näher beschrieben, wobei die Lagereinheiten 29a, 29b baugleich ausgeführt sind und bezüglich der Lagereinheit 29b auf die Beschreibung zur Lagereinheit 29a verwiesen werden darf. Die Federeinheit 18a ist radial zwischen einem äußeren Lagerring 30a und einem inneren Lagerring 31a der Lagereinheit 29a angeordnet. Die Federeinheit 18a umfasst vier Kunststofffederelemente 32a, 33a, 34a, 35a, die jeweils mit ihrem Innenumfang am inneren Lagerring 31a und mit ihrem Außenumfang am äußeren Lagerring 30a anliegen. Jeweils zwei der Kunststofffederelemente 32a, 33a, 34a, 35a sind in Bezug zu einer Lagerachse 36a der Lagereinheit 29a gegenüberliegend auf zur Lagerachse 36a und aufeinander senkrecht stehenden Symmetrieachsen 37a, 38a angeordnet, die jeweils einen Winkel von 45° zu einer parallel zur Längsrichtung 13 verlaufenden horizontalen Symmetrieachse 39a einschließen (Fig. 4 und 5).

Die Federeinheit 18a weist in radialer Richtung einen durch Anschläge 15a, 16a, 40a, 41a realisierten Impedanzsprung auf. Die ebenfalls von Federelementen gebildeten Anschläge 15a, 16a, 40a, 41a sind in Umfangsrichtung zwischen den Kunststofffederelementen 32a, 33a, 34a, 35a angeordnet, liegen mit ihrem Innenumfang am inneren Lagerring 31a an und weisen aufgrund einer kleineren radialen Erstreckung gegenüber den Kunststofffederelementen 32a, 33a, 34a, 35a einen radialen Abstand zum äußeren Lagerring 30a auf.

Die Federeinheit 18a weist in Längsrichtung 13, 14 von einer dargestellten Ausgangsstellung ausgehend über eine Wegstrecke 17a, 17b von +/- 3 mm bis zur Anlage der Anschläge 15a, 16a am Innenumfang des äußeren Lagerrings 30a eine Federkonstante von ca. 900 N/mm auf, in vertikaler Richtung 21, 22 weist die Federeinheit 18a bis zur Anlage der Anschläge 40a, 41a am Innenumfang eine Federkonstante von ca. 1600 N/mm auf und in Richtung der Lagerachse 36a weist die Federeinheit 18a eine Federkonstante von ca. 150 N/mm auf. Kommen die Anschläge 15a, 16a, 40a oder 41a am Innenumfang des äußeren Lagerrings 30a zur Anlage, steigt die Federkonstante der Federeinheit 18a in Richtung des jeweils anliegenden Anschlags 15a, 16a, 40a oder 41a sprunghaft auf ca. 6300 N/mm an. Ab Anschlag wäre jedoch auch eine Federkonstante zwischen 5000 N/mm und 10 000 N/mm denkbar.

Die von einer Schlitzbuchse gebildete Lagereinheit 47 weist ebenfalls eine nicht näher dargestellte Federeinheit auf, die in Querrichtung 19, 20 eine wesentlich größere Federkonstante aufweist als die Federeinheit 18a der Längskraftlagereinheit 12 in Längsrichtung 13, 14, und zwar weist die Federeinheit der Lagereinheit 47 in Querrichtung 19, 20 eine Federkonstante von ca. 100 000 N/mm auf.

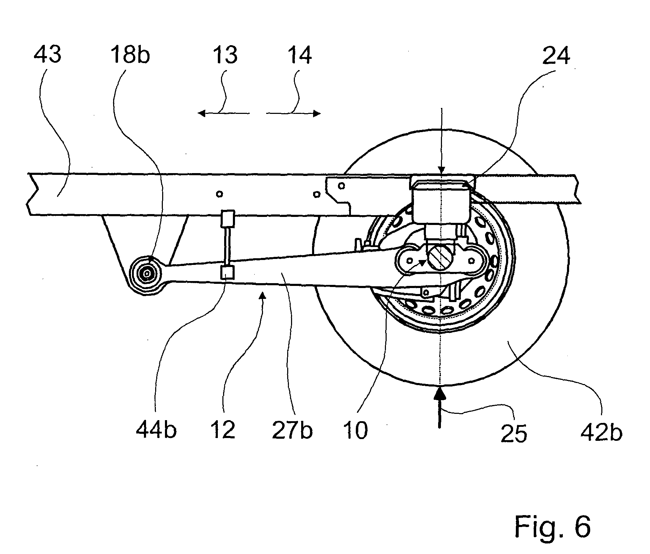

Der Achskörper 10 kann in Einbaulage in vertikaler Richtung 22 über eine von zwei Schraubendruckfedern gebildete Federeinheit 23 mit einer progressiven Federkennlinie abgestützt sein oder kann alternativ in vertikaler Richtung 22 über eine von zwei Luftfederbalken gebildete, einstellbare Luftfedereinheit 24 abgestützt sein. Die Luftfedereinheit 24 ist in der Einbaulage, bei horizontaler, ebener Fahrbahn zu einer durch eine Gewichtskraft hervorgerufenen, resultierenden vertikalen Abstützkraftkomponente 25 des Achskörpers 10 in Längsrichtung 13, 14 und in Querrichtung 19, 20 im Wesentlichen symmetrisch angeordnet. Die resultierende vertikale Abstützkraftkomponente 25 resultiert aus zwei über zwei Fahrzeugräder 42a, 42b eingeleitete vertikale Abstützkräfte und verläuft in Querrichtung 19, 20 in der Mitte des Achskörpers 10 in vertikaler Richtung 22 und schneidet mit einem Winkel von 90° eine horizontale Mittelachse des Achskörpers 10 (Fig. 1 und 6). Die beiden Luftfederbalken der Luftfedereinheit 24 stützen sich mit einem dem Achskörper 10 zugewandten Ende direkt auf demselben ab, so dass Federachsen der Luftfederbalken die horizontale Mittelachse des Achskörpers 10 schneiden und weisen zu der zwischen den beiden Luftfederbalken verlaufenden resultierenden vertikalen Abstützkraftkomponente 25 jeweils den gleichen Abstand in Querrichtung 19, 20 auf. Denkbar ist auch, dass Luftfederbalken mit ihren Federachsen beabstandet zu der horizontalen Mittelachse des Achskörpers 10 angeordnet sind, und zwar insbesondere, wenn durch eine entsprechend versetzte Anordnung auftretende Momente gegenseitig zumindest weitgehend ausgeglichen werden.

Aufgrund der platzsparenden Bauweise sowohl der Schraubendruckfedern als auch der Luftfederbalken können Stoßdämpferelemente 46a, 46b in Querrichtung 19, 20 mit einem vorteilhaft großen Abstand angeordnet werden, was sich zudem vorteilhaft auf die Fahrdynamik auswirkt.

Mittels zwischen den Längslenkern 27a, 27b und dem Aufbau 43 angeordneten Sensoren 44a, 44b ist der Beladezustand erfassbar und mittels einer nicht näher dargestellten Regeleinheit ist ein Höhenniveau des Kleintransporters über die Luftfedereinheit 24 auf einen konstanten Wert regelbar.

Bei einer Kurvenfahrt werden wirkende Seitenkräfte Fₛₐ, Fₛᵢ über die Seitenkraftlagereinheit 11 am Aufbau 43 abgestützt. In Fig. 3 ist die Hinterachse beispielhaft bei einer Rechtskurve dargestellt. Aufgrund der beabstandeten Anordnung der Seitenkraftlagereinheit 11 zum Achskörper 10 entsteht ein Moment, welches den Achskörper 10 um eine vertikale Achse in Richtung Vorspur verdreht. Dabei wird der Längslenker 27a in der Lagereinheit 29a in Längsrichtung 13 bis zu einer maximalen Wegstrecke 17a von 3 mm und der Längslenker 27b in der Lagereinheit 29b in Längsrichtung 14 bis zu einer maximalen Wegstrecke 17b von ebenfalls 3 mm verschoben. Insbesondere die Länge der Längslenker 27a, 27b und sonstige relevante Parameter sind in der Weise gewählt und abgestimmt, dass ein Wanklenkanteil stets Null ist.

Bei einer Linkskurve werden die Längslenker 27a, 27b entgegengesetzt verschoben. Bei einer Vollbremsung werden beide Längslenker 27a, 27b in Längsrichtung 14 um 3 mm verschoben, und zwar bis der Anschlag 15a der Lagereinheit 29a und ein entsprechender, nicht dargestellter Anschlag der Lagereinheit 29b zur Anlage kommen.

### Bezugszeichen

- 10: Achskörper
- 11: Seitenkraftlagereinheit
- 12: Längskraftlagereinheit
- 13: Längsrichtung
- 14: Längsrichtung
- 15: Anschlag
- 16: Anschlag
- 17: Wegstrecke
- 18: Federeinheit
- 19: Querrichtung
- 20: Querrichtung
- 21: Richtung
- 22: Richtung
- 23: Federeinheit
- 24: Luftfedereinheit
- 25: Abstützkraftkomponente
- 26: Abstand
- 27: Längslenker
- 28: Gummilager
- 29: Lagereinheit
- 30: Lagerring
- 31: Lagerring
- 32: Kunststofffederelement
- 33: Kunststofffederelement
- 34: Kunststofffederelement
- 35: Kunststofffederelement
- 36: Lagerachse
- 37: Symmetrieachse
- 38: Symmetrieachse
- 39: Symmetrieachse
- 40: Anschlag
- 41: Anschlag
- 42: Fahrzeugrad
- 43: Aufbau
- 44: Sensor
- 45: Differentialgetriebe
- 46: Stoßdämpferelement
- 47: Einheit
- Fₛₐ: Seitenkraft
- Fₛᵢ: Seitenkraft

## Patentansprüche

1. Hinterachse mit einem Achskörper (10), einer Seitenkraftlagereinheit (11), insbesondere einer Querlenkereinheit, zur Abstützung von Seitenkräften und einer Längskraftlagereinheit (12), insbesondere einer Längslenkereinheit, zur Abstützung von Längskräften,
**dadurch gekennzeichnet ,**
**dass** wenigstens ein Mittel (27a, 27b) der Längskraftlagereinheit (12) zur Erzielung eines Seitenkraftlenkens bei auftretenden Seitenkräften (Fₛₐ, Fₛᵢ) während des Betriebs in Längsrichtung (13, 14) beweglich ausgeführt ist.

2. Hinterachse nach Anspruch 1,
**dadurch gekennzeichnet ,**
**dass** die Längskraftlagereinheit (12) wenigstens eine Federeinheit (18a, 18b) zur bewegbaren Lagerung des Mittels (27a, 27b) der Längskraftlagereinheit (12) in Längsrichtung (13, 14) umfasst.

3. Hinterachse nach Anspruch 2,
**dadurch gekennzeichnet ,**
**dass** die Federeinheit (18a, 18b) in Längsrichtung (13, 14) wenigstens einen Impedanzsprung aufweist.

4. Hinterachse nach Anspruch 3,
**dadurch gekennzeichnet ,**
**dass** der Impedanzsprung durch wenigstens einen Anschlag (15, 16, 40, 41) realisiert ist.

5. Hinterachse nach Anspruch 4,
**dadurch gekennzeichnet ,**
**dass** der Anschlag (15, 16, 40, 41) von einem Federelement gebildet ist.

6. Hinterachse zumindest nach Anspruch 2,
**dadurch gekennzeichnet ,**
**dass** die Federeinheit (18a, 18b) in Längsrichtung (13, 14) eine Federkonstante zwischen 750 N/mm und 1050 N/mm aufweist.

7. Hinterachse nach einem der vorhergehenden Ansprüche,
**dadurch gekennzeichnet ,**
**dass** das Mittel (27a, 27b) der Längskraftlagereinheit (12) über eine Wegstrecke (17a, 17b) in Längsrichtung (13, 14) von mindestens 1 mm bewegbar ausgeführt ist.

8. Hinterachse nach einem der vorhergehenden Ansprüche,
**dadurch gekennzeichnet ,**
**dass** ein Wanklenkanteil kleiner als 0,3 Grad Spurwinkel im Betrag ist.

9. Hinterachse zumindest nach Anspruch 2,
**dadurch gekennzeichnet ,**
**dass** die Seitenkraftlagereinheit (11) eine Einheit (47) zur Abstützung in Querrichtung (19, 20) umfasst, die zumindest in Querrichtung (19, 20) eine größere Federkonstante aufweist als die Federeinheit (18a, 18b) der Längskraftlagereinheit (12) in Längsrichtung (13, 14).

10. Hinterachse nach einem der vorhergehenden Ansprüche,
**gekennzeichnet durch**
eine Federeinheit (23) mit einer progressiven Federkennlinie zur Abstützung des Achskörpers (10) in Einbaulage in vertikaler Richtung (22).

11. Hinterachse nach einem der vorhergehenden Ansprüche,
**gekennzeichnet durch**
eine Luftfedereinheit (24) zur Abstützung des Achskörpers (10) in Einbaulage in vertikaler Richtung (22).

12. Hinterachse nach Anspruch 11,
**dadurch gekennzeichnet ,**
**dass** die Luftfedereinheit (24) in Einbaulage, bei horizontaler, ebener Fahrbahn zu einer durch eine Gewichtskraft hervorgerufenen, resultierenden vertikalen Abstützkraftkomponente (25) des Achskörpers (10) in Längsrichtung (13, 14) und/oder in Querrichtung (19, 20) zumindest im Wesentlichen symmetrisch angeordnet ist.

13. Kraftfahrzeug mit einer Hinterachse nach einem der vorhergehenden Ansprüche.
